Europäisches Patentamt

European Patent Office

Office européen des brevets

(19)

(11) **EP 0 863 621 A1**

(12) **DEMANDE DE BREVET EUROPEEN**

(43) Date de publication:
**09.09.1998 Bulletin 1998/37**

(51) Int Cl.$^6$: **H04B 7/185**, H04L 1/08

(21) Numéro de dépôt: **98400497.8**

(22) Date de dépôt: **03.03.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **03.03.1997 FR 9702491**

(71) Demandeur: **ALCATEL ALSTHOM COMPAGNIE GENERALE D'ELECTRICITE**
**75008 Paris (FR)**

(72) Inventeurs:
• **Bousquet, Jacques**
**78290 Croissy sur Seine (FR)**
• **Dehaene, Jean-Pierre**
**95240 Cormeilles en Parisis (FR)**

(74) Mandataire: **Smith, Bradford Lee et al**
**COMPAGNIE FINANCIERE ALCATEL**
**Dépt. Propr. Industrielle,**
**30, avenue Kléber**
**75116 Paris (FR)**

(54) **Procédé de communication mis en oeuvre dans un système de transmission à ressource partagée**

(57) L'invention concerne un procédé de communication mis en oeuvre dans un système de transmission à ressource partagée. Selon l'invention, il consiste à émettre au moins deux paquets de données identiques sans attendre d'accusé de réception entre l'émission de ces paquets de données.

L'invention permet notamment d'obtenir une durée d'établissement d'une communication réduite par rapport à l'état de la technique et s'applique notamment aux transmissions par satellite.

FIG.2

**Description**

Le domaine de l'invention est celui de la transmission de données dans un système de transmission à ressource partagée. Plus précisément, la présente invention concerne un système de transmission à ressource partagée de type ALOHA pouvant par exemple être utilisé pour l'établissement d'une transmission, par exemple par satellite, entre une station appelante et une station appelée. Dans le cas d'une transmission par satellite, les stations sont typiquement des stations terriennes.

On se placera dans un premier temps dans le cadre d'une transmission de données par paquets sur une ressource partagée pour l'établissement d'une communication entre une station appelante et une station appelée. Cet établissement de communication est une phase préalable à la communication proprement dite et a pour fonction d'affecter une ressource réservée à cette communication.

Il existe un système d'accès, dit ALOHA aléatoire, mis en oeuvre avant l'établissement d'une communication. Ce système consiste, pour une station appelante, à émettre un paquet de données, dit paquet d'accès, à l'attention d'une station appelée, en employant pour cette transmission une ressource partagée avec d'autres stations. Cette ressource partagée est typiquement une fréquence porteuse. Les différentes stations se partagent cette ressource sans aucune réservation préalable de créneaux temporels et sans synchronisation temporelle des stations. Du fait de cette absence de réservation, des collisions entre des paquets d'accès émis par des stations différentes peuvent se produire. Afin de compenser ce risque de collisions, une station émettrice d'un premier paquet d'accès qui ne reçoit pas de message d'accusé de réception de la part de la station appelée réémet, un certain délai après l'émission du premier paquet d'accès, un deuxième paquet d'accès sur la ressource partagée.

En considérant que les émissions des paquets d'accès par les différentes stations sont décorrélées, c'est à dire que l'émission de ces paquets suit une loi de Poisson, la probabilité P qu'une collision entre des paquets d'accès se produise est égale à :

$$P = 1 - e^{-2RT}$$

avec R le nombre moyen de paquets transmis par seconde et T la durée d'un paquet. Le chiffre 2 indique qu'une collision se produit lorsque deux paquets de durée T sont transmis dans une fenêtre temporelle de durée 2T.

Pour remédier à cet inconvénient, il a été décidé de prévoir des fenêtres temporelles de durée T pendant lesquelles les stations seraient autorisées à émettre des paquets d'accès. Une synchronisation temporelle entre les différentes stations est dans ce cas prévue. Ce système est appelé l'ALOHA crénelé (ou encore à trame crénelée, et "slotted ALOHA" en anglais). Dans ce cas, la probabilité P qu'une collision entre des paquets d'accès se produise est égale à :

$$P = 1 - e^{-RT}$$

Ainsi, de manière générale, le nombre r de paquets d'accès transmis sans répétition s'écrit :

$$r = R^* e^{-kRT}$$

avec k = 1 pour l'ALOHA crénelé et k = 2 pour l'ALOHA aléatoire.

L'inconvénient principal de ces deux types de systèmes d'accès est que le nombre de répétitions des paquets d'accès est important, ce qui rallonge d'autant la durée de l'établissement de la communication. Ce problème prend une dimension considérable dans le cas de transmissions par satellite du fait de la distance parcourue par les paquets d'accès entre la station émettrice et la station destinatrice des paquets d'accès.

Une transmission de paquets de données peut également être réalisée selon les systèmes ALOHA, crénelés ou non. Dans ce cas, les paquets ne sont pas des paquets d'accès mais des paquets d'information proprement dite servant à la communication entre la station appelante et la station appelée. Ces paquets d'information véhiculent par exemple des informations d'alarme, de supervision, etc. Le même problème que celui posé précédemment pour les paquets d'accès se pose pour ces paquets d'information.

La présente invention a notamment pour objectif de remédier à ces inconvénients.

Plus précisément, un des objectifs de l'invention est de réduire le nombre de collisions entre des paquets de données transmis par une station dans un système où les émetteurs de tels paquets utilisent la même ressource.

Cet objectif, ainsi que d'autres qui apparaîtront par la suite, est atteint grâce à un procédé de communication mis en oeuvre dans un système de transmission à ressource partagée, caractérisé en ce qu'il consiste à émettre au moins deux paquets de données identiques sans attendre d'accusé de réception entre l'émission de ces paquets de données.

Avantageusement, ce procédé est mis en oeuvre pour l'établissement d'une communication et, dans ce cas, les paquets de données précités sont des paquets d'accès.

Ce procédé est avantageusement mis en oeuvre dans un système de transmission par satellite, soit pour l'établissement d'une communication, soit pour la communication proprement dite.

Les paquets de données comprennent préférentiellement chacun une information permettant de détecter une collision entre les paquets de données transmis sur la ressource partagée.

Les paquets peuvent être transmis espacés dans le temps et/ou sur des fréquences porteuses différentes et/ou par étalement par codes d'accès (mode de transmission CDMA).

L'invention s'applique à un système de transmission à ressource partagée de type ALOHA crénelé ou non.

D'autres caractéristiques et avantages de l'invention apparaîtront à la lecture de la description suivante d'un mode de mise en oeuvre préférentiel, donné à titre illustratif et non limitatif, et des dessins annexés dans lesquels :

- la figure 1 représente la probabilité de collision entre des paquets de données en fonction de la charge de la ressource partagée temporellement, pour $n = 1$ à $7$, avec $n$ le nombre d'émissions d'un même paquet de données pendant une durée prédéterminée, pour un système d'accès ALOHA aléatoire ;
- la figure 2 représente la probabilité de collision entre des paquets de données en fonction de la charge de la ressource partagée temporellement, pour $n = 1$ à $7$, avec $n$ le nombre d'émissions d'un même paquet de données pendant une durée prédéterminée, pour un système d'accès ALOHA crénelé.

On se placera dans la description suivante dans le cadre d'un système de transmission où les paquets de données transmis sur la ressource partagée sont des paquets d'accès destinés à permettre l'établissement d'une communication entre la station appelante et la station appelée.

Afin de limiter la durée d'établissement d'une communication et donc la probabilité de collision des paquets d'accès transmis par une station, l'invention propose de transmettre, au niveau de chaque station désirant établir une communication, au moins deux paquets d'accès sans attendre d'accusé de réception entre l'émission de ces paquets d'accès. Plus précisément, l'invention propose d'émettre $n$ fois ($n > 1$) le même paquet d'accès dans un intervalle de temps donné, qu'un message d'accusé de réception parvienne ou non de la station destinatrice de ces paquets.

Cette émission est réalisée dans un intervalle de temps inférieur à celui mis pour un trajet aller-retour d'un paquet entre la station appelante et la station appelée.

La probabilité que la station appelée n'ait pas reçu le message transmis est égale à celle que tous les paquets transmis soient entrés en collision avec d'autres paquets. Cette probabilité s'écrit :

$$P_n = P^n = (1 - e^{-kRT})^n$$

Le nombre total de paquets R transmis sur la ressource partagée est donc égal à la somme des $n*r$ paquets initiaux et des $R/n$ messages répétés avec la probabilité $P_n$, soit :

$$R = n*r + R*P_n \text{ ou encore } r = \frac{R}{n} *[1 - (1 - e^{-kRT})^n]$$

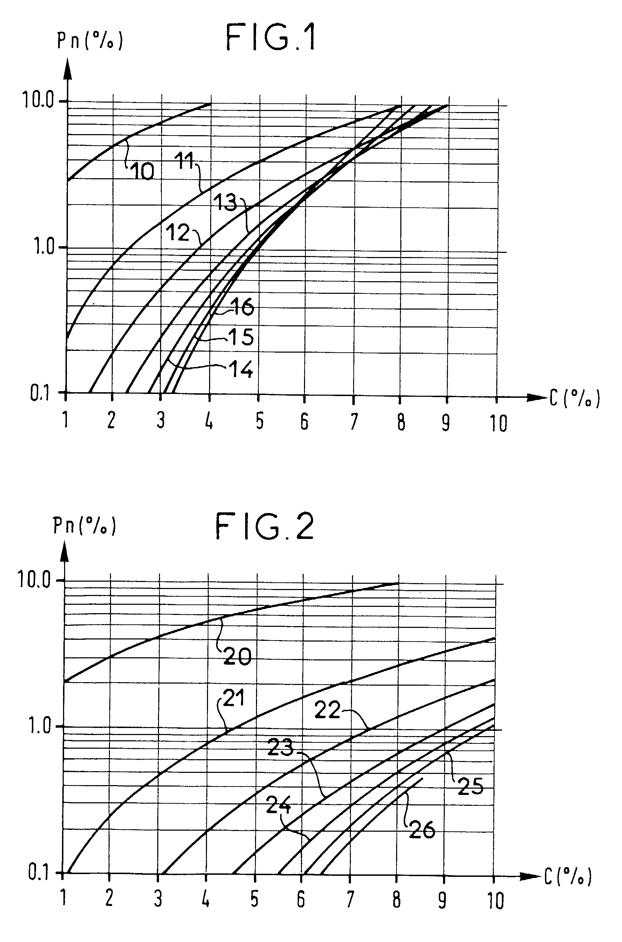

L'effet de l'invention est visible sur la figure 1 qui représente la probabilité de collision entre des paquets d'accès en fonction de la charge de la ressource partagée temporellement, pour $n = 1$ à $7$, avec $n$ le nombre d'émissions d'un même paquet d'accès pendant une durée prédéterminée, pour un système d'accès ALOHA aléatoire. Le taux d'erreur paquet est ici égal à 1%.

La caractéristique 10 correspond à l'état de la technique ($n = 1$), c'est à dire que pour une charge C de 4% de la ressource partagée, un paquet d'accès unique transmis a 10% de probabilité d'entrer en collision avec un autre paquet. Dans ce cas, une réémission du paquet sera nécessaire.

Les caractéristiques 11 à 16 correspondent respectivement à une transmission de $n = 2$ à $n = 7$ paquets d'accès dans un intervalle de temps donné, sans attendre d'accusé de réception de la part de la station destinatrice. On constate que pour $n = 2$, pour une même charge C de 4% de la ressource partagée, la probabilité $P_n$ que la station destinatrice n'ait pas reçu correctement un seul de ces paquets tombe à environ 2,5%, soit 4 fois moindre que pour $n = 1$. Plus $n$ est important, plus la probabilité qu'au moins un paquet transmis sera bien reçu par la station destinatrice devient forte. On notera cependant que ce procédé présente des limites lorsque la charge C est importante : en effet, dans ce cas, plus le nombre $n$ de paquets d'accès transmis est important, plus le risque de collisions augmente.

L'invention présente un intérêt accru lorsque les stations émettrices sont synchronisées temporellement. L'émission des paquets s'effectue alors selon le système ALOHA crénelé.

La figure 2 représente la probabilité de collision entre des paquets d'accès en fonction de la charge de la ressource partagée temporellement, pour $n = 1$ à $7$, avec $n$ le nombre d'émissions d'un même paquet d'accès pendant une durée prédéterminée, pour un système d'accès ALOHA crénelé. Le taux d'erreur paquet est ici également de 1%.

La caractéristique 20 correspond à l'état de la technique ($n = 1$), c'est à dire que pour une charge C de 8% de la ressource partagée, un paquet d'accès unique transmis a 10% de probabilité d'entrer en collision avec un autre paquet.

Les caractéristiques 21 à 26 correspondent respectivement à une transmission de $n = 2$ à $n = 7$ paquets d'accès dans un intervalle de temps donné, sans attendre d'accusé de réception de la part de la station destinatrice. On constate que pour $n = 7$, pour une même charge C de 8% de la ressource partagée, la probabilité $P_n$ que la station destinatrice n'ait pas reçu correctement un seul de ces paquets tombe à 0,3%. Le phénomène observé sur la figure 1 n'est pas visible sur cette figure 2 car il se produit pour une charge C supérieure à 10%.

La répétition systématique des paquets d'accès dans l'intervalle de temps prédéfini permet donc d'augmenter la probabilité qu'au moins un de ces paquets arrive à la station destinatrice, ce qui a pour conséquence une diminution de la durée nécessitée pour l'établissement d'une communication.

Les n paquets transmis peuvent être transmis sur la même fréquence porteuse et espacés dans le temps, de préférence de manière aléatoire. Une autre solution consiste à transmettre ces paquets sur des fréquences porteuses différentes, éventuellement en combinaison avec une répartition temporelle. D'autres modes de mise en oeuvre sont possibles, par exemple une transmission en mode CDMA où les paquets sont transmis par étalement par codes d'accès, par exemple des séquences de Walsh.

L'invention est particulièrement intéressante lorsqu'elle est appliquée à l'établissement d'une communication par satellite. En effet, dans ce cas, la probabilité d'avoir à retransmettre un ou plusieurs paquets d'accès est bien plus faible que dans l'état de la technique et il n'est pas nécessaire d'attendre, pour cette réémission, de constater la non-réception d'un message d'accusé de réception. Pour une liaison satellite, le gain de temps est celui du temps mis pour le signal radioélectrique pour faire un aller-retour entre les stations devant entrer en communication, soit environ 0,6 secondes pour un satellite en orbite géostationnaire.

L'invention s'applique également aux systèmes de transmission où l'accès de stations émettrices, par exemple mobiles, à une station ou plusieurs stations destinatrices, par exemple fixes, est réalisée selon le système ALOHA tel que décrit ci-dessus.

Avantageusement, les paquets d'accès transmis comportent chacun un code de redondance cyclique (CRC) ou une autre information permettant de détecter qu'il y a eu collision entre les paquets transmis.

Le CRC a pour but de détecter des erreurs de transmission. Il permet donc au destinataire de savoir si le message a été correctement transmis. En cas d'envoi systématique de n messages, il permet de savoir qu'au moins 1 message a été correctement transmis. De plus, au cas où les n messages arriveraient avec des valeurs de champ différentes, il permet au récepteur de connaître lesquels de ces messages sont bons. Il sécurise donc aussi par rapport à la qualité du canal lui-même (et pas seulement par rapport aux collisions).

Bien entendu, l'invention n'est pas limitée à l'établissement d'une communication et s'adresse également à l'émission de paquets de données (paquets d'information) dans le cours d'une communication entre deux stations.

**Revendications**

1. Procédé de communication mis en oeuvre dans un système de transmission à ressource partagée, caractérisé en ce qu'il consiste à émettre au moins deux paquets de données identiques sans attendre d'accusé de réception entre l'émission desdits paquets de données.

2. Procédé selon la revendication 1, caractérisé en ce qu'il est mis en oeuvre pour l'établissement d'une communication et en ce que lesdits paquets de données sont des paquets d'accès.

3. Procédé selon l'une des revendications 1 et 2, caractérisé en ce qu'il est mis en oeuvre dans un système de transmission par satellite.

4. Procédé selon l'une des revendications 1 à 3, caractérisé en ce que lesdits paquets de données comprennent chacun une information permettant de détecter une collision entre les paquets de données transmis sur ladite ressource partagée.

5. Procédé selon l'une des revendications 1 à 4, caractérisé en ce que lesdits paquets de données sont transmis espacés dans le temps.

6. Procédé selon l'une des revendications 1 à 5, caractérisé en ce que lesdits paquets de données sont transmis sur des fréquences porteuses différentes.

7. Procédé selon l'une des revendications 1 à 6, caractérisé en ce que lesdits paquets de données sont transmis par étalement par codes d'accès.

8. Procédé selon l'une des revendications 1 à 7, caractérisé en ce qu'il est appliqué à un système de transmission à ressource partagée de type ALOHA non crénelé.

9. Procédé selon l'une des revendications 1 à 7, caractérisé en ce qu'il est appliqué à un système de transmission à ressource partagée de type ALOHA crénelé.

# FIG.1

# FIG.2

**Office européen des brevets**

## RAPPORT DE RECHERCHE EUROPEENNE

Numéro de la demande

EP 98 40 0497

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN vol. 096, no. 006, 28 juin 1996 & JP 08 032596 A (SHARP CORP), 2 février 1996, * abrégé * | 1 | H04B7/185 H04L1/08 |
| X | PATENT ABSTRACTS OF JAPAN vol. 011, no. 355 (E-558), 19 novembre 1987 & JP 62 131636 A (NIPPON HOSO KYOKAI), 13 juin 1987, * abrégé * | 1 | |
| X | PATENT ABSTRACTS OF JAPAN vol. 010, no. 201 (E-419), 15 juillet 1986 & JP 61 043850 A (NEC CORP), 3 mars 1986, * abrégé * | 1 | |
| A | US 5 138 631 A (TAYLOR) 11 août 1992 * colonne 1, ligne 49 - colonne 3, ligne 45 * | 1,3,5-9 | |
| A | US 4 841 527 A (RAYCHAUDHURI ET AL.) 20 juin 1989 * colonne 2, ligne 52 - colonne 3, ligne 41 * | 1,2 | DOMAINES TECHNIQUES RECHERCHES (Int.Cl.6) H04B H04L |
| A | US 5 142 533 A (CRISLER ET AL.) 25 août 1992 * colonne 3, ligne 15 - colonne 4, ligne 56 * | 1,2 | |

Le présent rapport a été établi pour toutes les revendications

| Lieu de la recherche | Date d'achèvement de la recherche | Examinateur |
|---|---|---|
| LA HAYE | 29 juin 1998 | Gastaldi, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)